# EUROPÄISCHE PATENTSCHRIFT

(11) **EP 3 700 702 B1**
(45) Veröffentlichungstag und Bekanntmachung des Hinweises auf die Patenterteilung: **18.08.2021**
(21) Anmeldenummer: 18792373.5
(22) Anmeldetag: 12.10.2018
(51) Int. Cl.: B23K 9/00, B23K 9/02, B23K 15/00, B23K 33/00, F28F 9/02, F28F 21/08, B23P 15/26, B23K 101/14, B23K 103/04

(54) **WÄRMETAUSCHERELEMENT UND VERFAHREN ZUR HERSTELLUNG EINES WÄRMETAUSCHERELEMENTS**
HEAT EXCHANGE ELEMENT AND METHOD FOR MANUFACTURING A HEAT EXCHANGE ELEMENT
ELÉMENT D'ÉCHANGE DE CHALEUR ET PROCÉDÉ DE FABRICATION D'UN ÉLÉMENT D'ÉCHANGE DE CHALEUR

(30) Priorität: 24.10.2017 DE 102017124808
(43) Veröffentlichungstag der Anmeldung: 02.09.2020
(73) Patentinhaber: Kelvion Holding GmbH, 44807 Bochum (DE)
(72) Erfinder: SATIN, Mehmet, 45772 Marl (DE); YONGZHI, Lv, Shanghai (CN); KANG, Shen, Changshu Jiangshu (CN)
(74) Vertreter: Griepenstroh, Jörg
(86) Internationale Anmeldenummer: PCT/DE2018/100841
(87) Internationale Veröffentlichungsnummer: WO 2019/080962

(56) Entgegenhaltungen:
- DE-A1- 2 526 480
- DE-A1-102005 005 214
- JP-U- S5 724 890
- US-A1- 2011 198 317

## Beschreibung

Die Erfindung betrifft ein Wärmetauscherelement und ein Verfahren zur Herstellung eines Wärmetauscherelements. Wärmetauscher zum Austausch von thermischer Energie zwischen strömungsfähigen Medien, insbesondere zwischen Flüssigkeiten und Gasen, besitzen zur Medientrennung, von einem Wärmetauschermedium durchströmte Kanäle, insbesondere in Form von Rohren. Die Rohre werden mit einem sogenannten Rohrboden verbunden, der Bestandteil eines Wärmetauscherkopfes ist. Wärmetauscherköpfe sowie die Rohre von Wärmetauschern bestehen aufgrund der hohen thermischen Leitfähigkeit zumeist aus Metall. Dementsprechend werden die Wärmetauscherköpfe oftmals als Schweißkonstruktionen ausgeführt. Das Verschweißen von medienführenden Komponenten stellt hohe Anforderungen an das Schweißverfahren, da Mediendichtheit auch unter teilweise hohen Drücken und unter hoher thermischer Wechselbeanspruchung zu keinen Ermüdungserscheinungen während des Betriebs führen darf. Aus diesem Grund müssen teils aufwendige Schweißnahtvorbereitungen für Kehl- und Stumpfnähte durchgeführt werden. Es kommen besondere Schweißverfahren, wie beispielsweise das Unterpulverschweißen Plasmaschweißen, WIG-Schweißen oder Elektroden¬schweißen zum Einsatz, um eine hohe Schweißgüte zu gewährleisten. Ein Beispiel soll verdeutlichen, wie groß der Aufwand zum Verschweißen dickwandiger Bauteile (>10 mm) für Wärmetauscher ist: Bei Bauteilen größerer Dicke, die durch Unterpulverschweißen miteinander verbunden werden sollen, wird nach der beidseitigen Nahtvorbereitung zu einer Doppel V-Naht zunächst mittels Unterpulverschweißen von der einen Seite (Wurzelseite) her eine erste Schweißnaht als Gegenschweißung/Kappe ausgeführt. Die Gegenschweißung ist erforderlich, weil es bei Wärmetauschern, in denen teilweise sehr hohe Drücke herrschen, nicht zulässig ist, Bauteile zu verwenden, die an ihren Verbindungsstellen nicht vollständig durchgeschweißt sind, bzw. Kerbstellen besitzen. Die Gegenschweißung befindet sich auf der späteren Innenseite des Wärmetauschers. Die Nahtvorbereitung auf der Außenseite muss so tief reichen, dass nur eine schmale Anlagefläche zwischen den Bauteilen verbleibt, die beim Schweißen komplett aufgeschmolzen wird.

Bei schwierig zu verarbeitenden Werkstoffen, insbesondere aus der Gruppe der hochkorrosionsbeständigen Nickel-Molybdän-Legierungen, werden relativ große, d.h. breite Nahtvorbereitungen gemacht. Es muss in jedem Fall vermieden werden, dass beim Schweißen Mikrorisse im Gefüge entstehen, die beim nachträglichen Röntgen oder Ultraschall der Schweißverbindung erkannt werden können. Die relativ großen Nahtvorbereitungen führen dazu, dass je nach Dicke des Werkstückes 10 oder mehr Schweißlagen nacheinander aufgetragen werden müssen. Üblicherweise werden die ersten Schweißlagen von Hand eingebracht. So kann der Wärmeeintrag besser gesteuert werden und gezielt niedrig gehalten werden. Die weiteren Lagen können dann maschinell hergestellt werden. Bei einer Bauteildicke von 20 mm sind beispielsweise schon 9 Lagen auf der einen, äußeren Seite herzustellen zuzüglich der Gegenschweißung auf der Innenseite. Bei einer Bauteildicke von 30 mm sind außenseitig 15 Lagen für eine fachgerechte Schweißung erforderlich und bei einer Bauteildicke von 35 mm sogar 20 Schweißlagen. Bei Bauteilen über 100 mm Dicke ist der Fertigungsaufwand immens hoch. Die Bearbeitungszeiten sind sehr lang. Die Kosten für die Schweißzusatzstoffe sind erheblich.

Zum Stand der Technik zählen auch Elektronenstrahlschweißverfahren, die beispielsweise zur Herstellung mehrteiliger Baugruppen in der AT 500 655 A1 beschrieben sind. Durch die DE 102 58 503 A1 zählt ein Tunnelrohrboden für Wärmetauscher zum Stand der Technik, bei welchem Stahlblechplatten des Rohrbodens mit Hilfe des Laserstrahlschweißens oder Elektronenstrahlschweißens mit Stegen eines Tragbodens verschweißt sind. Damit sollen höhere Qualitäten in der Ausführung und damit in den technischen Parametern der Wärmetauscher erreicht werden, sowie Fertigungskosten gesenkt werden. Die Bauteile werden so vorbereitet, dass bei einer Stoßverbindung an einem ersten Bauteil ein Absatz hergestellt wird, auf den das zweite Bauteil gelegt wird. Es entsteht ein im Querschnitt L-förmiger Stoß, in den der Elektronenstrahl gerichtet wird, so dass der Elektronenstrahl direkt auf den Absatz gerichtet ist, der von dem Elektronenstrahl aufgeschmolzen wird. Bei dünnwandigen Bauteilen kann dadurch auch der kürzere Schenkel des Stoßes komplett aufgeschmolzen werden. Bei dickwandigeren Bauteilen sind die Toleranzfelder unter Umständen größer. Zudem ist der Absatz als Auflager dann breiter und insbesondere deutlich breiter als ein Elektronenstrahl. In diesem Fall kann der Elektronenstrahl die L-förmige Fuge nicht komplett verschweißen. Je länger der Absatz ist, desto problematischer ist die Vorgabe, die Schweißfuge vollständig aufzuschmelzen zu erfüllen.

Es zählt auch die US 2011/0198317 A1 zum Stand der Technik, bei welcher zwei Bauteile zu einem Eckstoß anzuordnen, wobei von einer Seite des Eckstoßes eine Schweißnaht durch Elektronenstrahlschweißen hergestellt wird, die gegen eine Wurzelgegenschweißung gerichtet ist, die als V-Naht ausgeführt ist und somit den Oberbegriff des Anspruchs 1 offenbart.

Die JP S57 24890 U offenbart ein Verfahren zur Herstellung eines Wärmetauscherelementes, wobei eine L-förmige Schweißfuge zwischen einem ersten Bauteil und einem zweiten Bauteil gebildet wird. Es wird von der gegenüberliegenden Seite in einem oberen Schenkel der Schweißfuge eine I-förmige Schweißnaht durch elektronisches Verschweißen hergestellt. Es handelt sich um sehr dünnwandige Bauteile.

Die DE 10 2005 005 214 A1 offenbart ein Verfahren zum Erstellen von Fügehilfen an Schweißteilen, nämlich von einem Absatz und einem Fügevorsprung. Bei einander entsprechender Bemessung beiderseitiger Fügehilfen an den Bauteilen schließen die in Fügeaufnahmen eintauchenden Fügevorsprünge bündig ab.

Die DE 25 26 480 A1 offenbart ein Verfahren zum Verschweißen von Eckstößen von dicken Bauteilen mit Hilfe von ausgebildeten tiefen Fugen bzw. Kehlen. Das Verschweißen erfolgt mittels Unterpulverschweißens in einem oberen Schenkel einer L-förmigen Schweißfuge.

Der Erfindung liegt die Aufgabe zugrunde, einen Wärmetauscherelement zur Verbindung mit Rohren eines Wärmetauschers aufzuzeigen, das kostengünstig hergestellt werden kann, schweißtechnisch besonders hochwertig ist und eine hohe Betriebssicherheit gewährleistet. Ferner soll ein Verfahren zur Herstellung eines solchen Wärmetauscherkopfes aufgezeigt werden.

Ein Wärmetauscherelement das diese Aufgabe löst ist Gegenstand des Patentanspruchs 1. Es besteht aus mehreren miteinander verschweißten Bauteilen, die unter anderem mittels Elektronenstrahlschweißen miteinander verbunden sind. Die besagten Bauteile sind Bestandteile eines Wärmetauscherkopfes.

Des Weiteren wird diese Aufgabe durch ein Verfahren zur Herstellung eines Wärmetauscherelements gemäß dem Anspruch 10 gelöst.

Die Unteransprüche betreffen vorteilhafte Weiterbildungen der Erfindung. Das erfindungsgemäße Wärmetauscherelement gehört zum Wärmetauscherkopf oder bildet den Wärmetauscherkopf. Die Bauteile sind mittels Elektronen¬strahlschweißen miteinander verbunden. Elektronenstrahlschweißen hat insbesondere bei Bauteilen eines Wärmetauscherkopfes den außerordentlichen Vorteil, dass das vergleichsweise aufwendige Unterpulverschweißen vollständig oder größtenteils ersetzt werden kann. Das erfindungsgemäße Wärmetauscherelement stellt nicht darauf ab, dass das Elektronenstrahlschweißen das einzige Schweißverfahren ist, mit welchem es hergestellt ist. Es kann mit weiteren Schweißverfahren, insbesondere mit Unterpulverschweißverfahren, WIG-Schweiß¬verfahren, Plasmaschweißverfahren oder Elektrodenschweißverfahren kombiniert werden, soll diese aber möglichst ersetzen. Die durch Elektronenstrahlschweißen hergestellte Schweißnaht ist von Wurzelgegenschweißung gestützt, wobei die Wurzelgegenschweißung vor dem Elektronenstrahlschweißen hergestellt wird.

Das erfindungsgemäße Wärmetauscherelement umfasst zwei Bauteile, die in einem Eckstoß über eine durch Elektronenstrahlschweißen hergestellte Schweißnaht verbunden sind. Die Schweißnaht ist als I-Naht ausgeführt.

Bei derartigen I-Nähten muss - anders als bei Kehlnähten - weniger Material entfernt werden. Es sind keine oder zumindest weniger Schweißzusatzwerkstoffe erforderlich. Auch sind keine Pulver (für das Unterpulverschweißverfahren) erforderlich. Gleichzeitig kann mit dem Elektronenstrahlschweißen bei hinreichend genauer Nahtvorbereitung eine Schweißnaht sehr hoher Qualität hergestellt werden, die letztendlich auch weniger Reparaturen und Nacharbeiten bedingt.

Bei der I-Naht entfallen - im Gegensatz zu der klassischen (V-)Nahtvorbereitung von 45° +/- 25° - die klassischen Nahtvorbereitungen. Das ist bei komplexen Bauteilen ein entscheidender Unterschied und ist ein deutlicher Vorteil gegenüber dem klassischen Schweißverfahren, wie dem Unterpulverschweißen oder dem WIG- und Elektrodenschweißen.

Im Bereich der Nahtwurzel, das heißt in der Kehle zwischen den beiden miteinander verschweißten Bauteilen, wird zusätzlich eine Stützschweißung als Wurzelgegenschweißung insbesondere durch Unterpulverschweißen durchgeführt. Die Kehle kann dementsprechend auch mit einer Wurzelgegenschweißung in ein oder mehreren Lagen gefüllt werden. Gemäß der Erfindung ist die Kehle ist in den beiden zu verbindenden

Bauteilen als Vertiefung/Phase ausgearbeitet. Damit ist der Vorteil verbunden, dass der tiefste Punkt der Kehle sehr nahe dem Auflager liegt, so dass das Auflager komplett aufgeschmolzen wird, damit sich die Schmelze bis in den oberen/anderen Schenkel der L-förmigen Stoßfuge erstreckt. Dadurch wird die Basis für die Elektronenstrahlschweißung geschaffen. Der Elektronenstrahl schmilzt bei der Erfindung die Wurzelgegenschweißung teilweise auf und nicht das Auflager. Der Elektronenstrahl ist nur in Richtung des ursprünglichen Auflagers orientiert, wo sich bedingt durch die Fertigungsreihenfolge die Wurzelgegenschweißung befindet. Mit der Erfindung sind längere Auflager möglich. Dadurch können größere Toleranzfelder gewählt werden. Dennoch ist eine präzise, schnelle und qualitativ hochwertige schweißtechnische Fertigung möglich.

In einem weiteren Ausführungsbeispiel ist an einem der beiden miteinander verschweißten Bauteile eine Außenkante des Wärmetauscherelements ausgebildet, die im parallelen Abstand zur Schweißnaht verläuft. Bevorzugt sind zwei Bauteile in dem Eckstoß über eine durch Elektronenstrahlschweißen hergestellte Schweißnaht verbunden, die als vertikale I-Naht ausgeführt ist. Vertikal bedeutet in diesem Zusammenhang, dass die Schweißfugenflächen der Bauteile beim Schweißen senkrecht, angeordnet sind. An dem Bauteil, zu welchem die Schweißnaht parallel verläuft, ist als Auflager für das zweite Bauteil ein gegenüber der Innenseite des ersten Bauteils zurückspringender Absatz ausgebildet, so dass eine Schweißwurzel der vertikalen Schweißnaht im Abstand von einer Innenseite des ersten Bauteils verläuft. Bei dieser Art des Verschweißens kann ein Elektronenstrahl mit hoher Leistung eingebracht werden, da die Energie über die Stirnseite des Bauteils in das Bauteil eingebracht wird.

Auch bei der sogenannten vertikalen Schweißnaht wird die Schweißwurzel von einer zuvor hergestellten Wurzelgegenschweißung an dem Absatz gestützt, auf den der Elektronenstrahl beim Schweißen gerichtet ist. Die Schweißwurzel befindet sich nicht in beliebiger Tiefe in dem ersten Bauteil, sondern dort, wo die Schweißfugenflächen am Absatz enden. Tiefergehende Elektronenstrahlen hätten keinen Vorteil im Hinblick auf die Haltbarkeit der Schweißnaht. Wichtig ist allerdings, dass die besagten Bauteile im Bereich der Wurzelgegenschweißung also auch an dem Absatz, der quer zum Elektronenstrahl verläuft, prozesssicher miteinander verbunden sind. Hierzu ist, gemäß der Erfindung, die Wurzelgegenschweißung als V-Naht ausgeführt, die bis in den Absatz reicht, so dass es eine vollflächige Verschweißung gibt. Die Wurzelgegenschweißung kann als Unterpulver-, Plasma-, WIG- oder MAG-Schweißung ein- oder mehrlagig ausgeführt sein.

Bevorzugt ist wenigstens ein Bauteil eine Wand oder ein Rohrboden des Wärmetauscherkopfes, wobei dieses Bauteil mit einem weiteren als Wand, als innere Abstützung, als Trennblech oder als Anschlussstück für den Wärmetauscherkopf ausgebildeten Bauteil verbunden ist. Wärmetauscherköpfe können je nach Druckbeanspruchung mit inneren Abstützungen und/oder Trennwänden versehen sein, die mit den äußeren Wänden oder Rohrböden verbunden werden, um Zug- oder Druckkräfte zu übertragen. Zugkräfte werden dann übertragen, wenn ein Überdruck innerhalb des Wärmetauscherkopfes besteht. Es gibt allerdings auch Anwendungen, bei denen die Wärmetauscher mit Unterdruck betrieben werden. In diesem Fall dienen die inneren Abstützungen gegen Überdruck von außen.

In einer weiteren Ausführungsform der Erfindung ist das erste Bauteil zylindrisch und das zweite Bauteil ein Deckel für das erste Bauteil. Wärmetauscherköpfe sind nicht zwingend quaderförmig oder als halbrund ausgebildet. Es gibt insbesondere auch zylindrische Querschnitte bei Wärmetauscherköpfen. Zylindrische Wärmetauscherköpfe werden mit Rohren verbunden, indem die Rohre von außen mit den Wärmetauscherköpfen gefügt werden. Herstellungsbedingt sind zylindrische Wärmetauscherköpfe zumindest an einem Ende über einen Deckel zu verschließen. Die Schweißnaht zwischen dem Deckel und dem zylindrischen Körper des Wärmetauscherkopfes ist erfindungsgemäß durch Elektronenstrahlschweißen hergestellt.

Das erfindungsgemäße Wärmetauscherelement besitzt bevorzugt Bauteile, die eine Dicke in einem Bereich von 10 bis 200 mm, vorzugsweise 10 bis 120 mm haben. Bei Werkstoffen dieser Dicken, lassen sich Wärmetauschprozesse unter hohen oder sehr niedrigen Drücken betreiben. Das Verschweißen der Bauteile mit so großen Wanddicken kann nach dem klassischen Verfahren des Unterpulver-, WIG-, Elektroden-, Plasma- oder MAG-Schweißen sehr aufwendig und zeitintensiv sein. Gerade bei den sehr großen Wanddicken über 30 mm kann das Elektronenstrahlschweißen das Schweißverfahren deutlich vereinfachen. Insbesondere ist zu berücksichtigen, dass Wärmetauscher für industrielle Anlagen Längen von bis zu 6.000 mm haben.

Der konkrete Anwendungsfall bzw. die Kundenanforderungen bestimmen in der Regel, welche Druckfestigkeiten erreicht werden sollen oder müssen und welche Medien durch die Wärmetauscher geführt werden müssen. Daraus ergibt sich eine infrage kommende Auswahl metallischer Werkstoffe. Die zu verschweißenden Bauteile bestehen vorzugsweise aus einem der folgenden Werkstoffe:
SA-516 Gr60, P265GH, SA-516 Gr70, SA-537 Cl1, SA-350 LF2 CL1, SA-333 Gr6, P355NH, SA-335P22, SA-387 Gr11Cl2, SA-387 Gr12Cl1, SA-387 Gr11Cl1, SA-240 Gr304L, SA-240 Gr304, SA-240 Gr316L, X6CrNiRi18-10 (321), X2CrNiMo17-12-2-(316L).

Die Erfindung wird nachfolgend anhand von in den schematischen Zeichnungen dargestellten Ausführungsbeispielen näher erläutert. Es zeigen:
- Figur 1: Eine perspektivische Darstellung eines Wärmetauscherkopfes;
- Figur 2: Den Wärmetauscherkopf der Figur 1 im Längsschnitt;
- Figur 3: Eine Stirnansicht des Wärmetauscherkopfes der Figur 1 ;
- Figur 4: Ein Wärmetauscherkopf im Querschnitt;
- Figur 5: Einen Eckbereich zu verschweißender Bauteile, vorbereitet für das Elektronenstrahlschweißen;
- Figur 6: Den verschweißten Eckbereich der Figur 5;
- Figur 7: Einen weiteren Eckbereich, der zum Elektronenstrahlschweißen vorbereitet ist;
- Figur 8: Der durch Elektronenstrahlschweißen und durch Unterpulverschweißen verbundene Eckbereich der Figur 7;

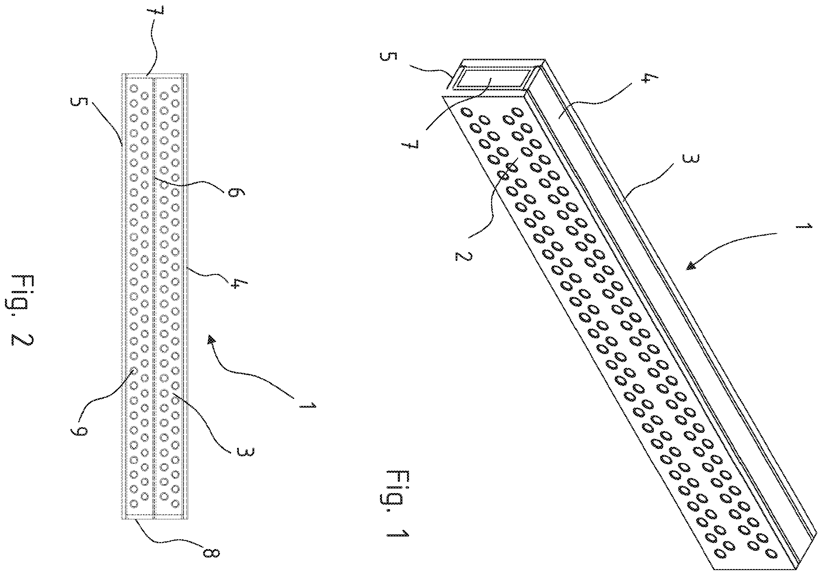

Figur 1 zeigt ein Wärmetauscherelement 1 in Gestalt eines kastenförmigen Wärmetauscherkopfes zur Begrenzung einer Kammer. Das Wärmetauscherelement 1 besteht aus mehreren miteinander verschweißten Bauteilen. Ein erstes Bauteil 2 ist ein Rohrboden. Er dient zur Aufnahme von nicht näher dargestellten Rohren in dafür vorgesehenen Öffnungen in dem Bauteil 2. Parallel zum Rohrboden verläuft weiteres Bauteil 3 in Form eines rückseitigen Gewindebodens. Zwischen dem Rohrboden und dem rückseitigen Gewindeboden sind als weitere Bauteile 4, 5 ein oberes und ein unteren Kammerblech geschweißt.

Der Längsschnitt der Figur 2 durch das Wärmetauscherelement 1 der Figur 1 zeigt, dass in Längsrichtung im Abstand zum oberen und unteren Kammerblech ein Bauteil 6 in Form eines sich von einem Ende zum anderen Ende des Wärmetauscherelements 1 erstreckenden Trennblechs angeordnet ist, welches parallel zum oberen und unteren Kammerblech verläuft und das untere Kammerblech mit dem Gewindeboden schweißtechnisch verbindet. Die Enden des Wärmetauscherelements 1 sind durch Endplatten 7, 8 verschlossen, wie sie in den Figuren 1, 2 und 3 zu erkennen sind.

Auch der Gewindeboden besitzt Bohrungen 9 zur Aufnahme von Rohren.

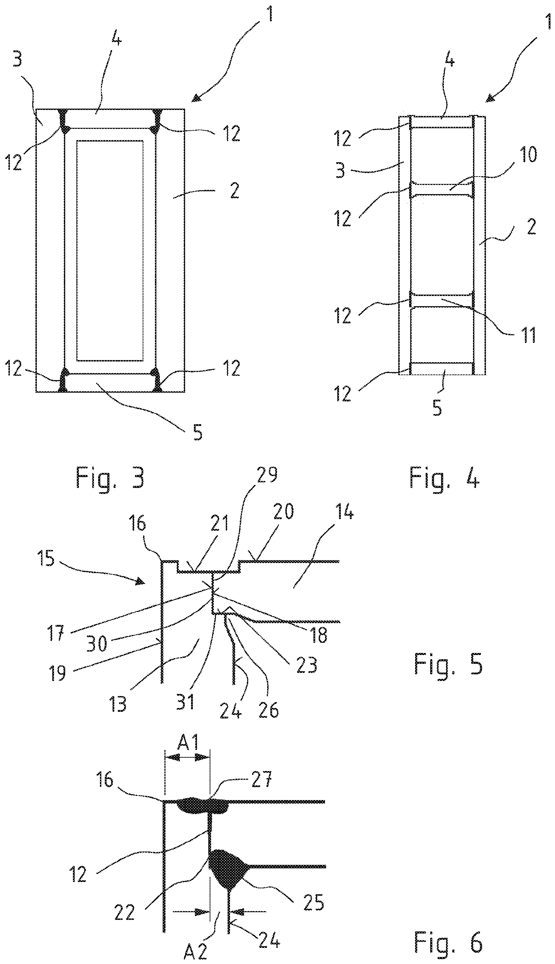

Figur 3 zeigt eine Querschnittsdarstellung durch ein anderes Wärmetauscherelement 1, das sich von der vorhergehenden Ausführungsform dadurch unterscheidet, dass zwei aussteifende Bauteile 10, 11 in Form von Trennblechen in parallelem Abstand zur oberen Kammerwand und zur unteren Kammerwand zwischen dem Rohrboden und dem Gewindeboden verlaufen. Das Ausführungsbeispiel der Figur 4 soll verdeutlichen, dass sowohl die Wandstärken gegenüber dem Ausführungsbeispiel der Figur 1 variieren können, als auch die Proportionen und die Anzahl der einzelnen Bauteile 10, 11.

Das erfindungsgemäße Wärmetauscherelement 1 besitzt Bauteile, die miteinander verschweißt sind, und zwar durch Elektronenstrahlschweißen. Die Schweißkonstruktion besitzt eine Reihe von Schweißnähten, die sich an den außenliegenden Bauelementen erstrecken können, insbesondere im Verbindungsbereich zwischen dem Rohrboden und dem oberen und unteren Kammerblech. Gleiches gilt für die Verbindung zwischen dem oberen und unteren Kammerblech jeweils mit dem rückwärtigen Gewindeboden. Die Schweißnähte können sich aber auch im Inneren des Wärmetauscherelements 1 erstrecken, wie Figur 4 zeigt. Dort befinden sich die Schweißnähte zusätzlich jeweils endseitig der aussteifenden Bauteile 10, 11 in Form von Trennblechen im Übergang zum Rohrboden bzw. rückwärtigen Gewindeboden.

Figur 3 zeigt beispielhaft und stellvertretend für alle anderen Konstellationen in jedem Eckbereich eine solche Schweißnaht 12.

Figur 5 zeigt in vergrößerter Darstellung die Vorbereitung der einzelnen Bauteile 13, 14 zum Verschweißen. Der Einfachheit halber wird das in der Bildebene linke Bauteil nachfolgend als erstes Bauteil 13 und das im 90°-Winkel dazu angeordnete andere Bauteil als zweites Bauteil 14 bezeichnet. Die beiden Bauteile 13, 14 bilden einen Eckstoß 15, wobei das erste Bauteil 13 eine Außenkante 16 des daraus hergestellten Wärmetauscherelements 1 bestimmt. Die beiden Bauteile 13, 14 sind derart vorbereitet, dass die Schweißnaht 12, wie sie in Figur 6 gezeigt ist, im parallelen Abstand A1 zur Außenkante 16 verläuft. Die beiden Bauteile 13, 14 sind über eine

I-Naht 12 miteinander verbunden. Die I-Naht ist durch Elektronenstrahlschweißen hergestellt. Die I-Naht 12 ist als vertikale I-Naht ausgeführt. Schweißfugenflächen 17, 18 der L-förmigen Schweißfuge 29 verlaufen einerseits parallel zu einer Außenseite 19 des ersten Bauteils 13 im Bereich des Eckstoßes 15. Andererseits verlaufen die Schweißfugenflächen 17, 18 aufgrund der 90°-Anordnung der Bauteile 13, 14 senkrecht zu der Außenseite 20 des zweiten Bauteils 14. Die Schweißfuge 29 besitzt daher einen oberen Schenkel 30 und einen unteren Schenkel 31 am Absatz 23.

In der in der Bildebene oberen Außenseite 20 bzw. der Stirnseite des ersten Bauteils 13 befindet sich eine nutförmige Vertiefung 21 als Nahtvorbereitung. Im Bereich einer Schweißwurzel 22, der durch Elektronenstrahlschweißen hergestellten Schweißnaht 12 (Figur 6), befindet sich ein zurückspringender Absatz 23, so dass die Schweißwurzel 22 der vertikalen I-Naht 12 in einem Abstand A2 von einer Innenseite 24 des ersten Bauteils 13 verläuft. Das erste Bauteil 13 ist in dieser Querschnittsebene hinsichtlich der Innenseite 24 und der Außenseite 19 parallel. Es handelt sich vorzugsweise um ein plattenförmiges Bauteil.

Figur 6 zeigt, dass sowohl im Bereich der Schweißwurzel 22 der durch Elektronenstrahlschweißen hergestellten vertikalen I-Naht 12 eine Wurzelgegenschweißung 25 ausgeführt ist, die bis zu dem Absatz 23 reicht. Figur 6 zeigt, dass für die Wurzelgegenschweißung 25 eine V-Kehle 26 angrenzend an den Absatz 23 in Form einer V-förmigen Vertiefung angearbeitet worden ist.

Der Eintrittsbereich der durch Elektronenstrahlschweißen hergestellten I-Naht 12 ist über eine Decknaht 27 geschlossen, die in der U-förmigen Vertiefung 21 angeordnet ist. Wegen der Vertiefung 21 steht die Decknaht 27 so gut wie nicht über die Außenseite 20 vor. Sowohl die Wurzelgegenschweißung 25, als auch die Decknaht 27 können durch ein Unterpulverschweißen hergestellt sein. Es ist auch möglich, die Wurzel¬gegenschweißung 25 und die Decknaht 27, durch ein Plasmaschweißverfahren, WIG-Schweißverfahren, Elektroden- oder MAG-Schweißverfahren herzustellen.

In Figur 4 sind beispielhaft vier identische Schweißnähte mit dem Bezugszeichen 12 bezeichnet, um zu verdeutlichen, dass auch hierdurch Elektronenstrahlschweißen nicht nur die außenliegenden, sondern auch die innenliegenden Nähte hergestellt werden können.

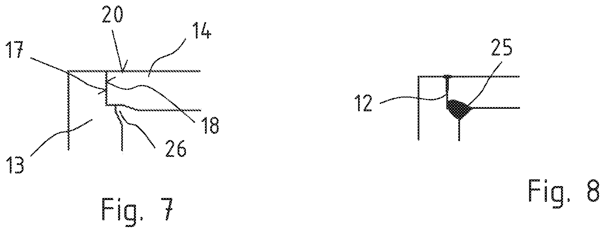

Die Figuren 7 und 8 zeigen den Verlauf der I-Naht 12. Die Figur 7 zeigt die Nahtvorbereitung und die Figur 8 den verschweißten Zustand. Es wird auf die in den Figuren 5 und 6 eingeführten Bezugszeichen zurückgegriffen, soweit identische Bauteile und Merkmale bezeichnet werden.

Figur 7 unterscheidet sich von derjenigen der Figur 5 dadurch, dass auf eine Vertiefung 21 an der oberen Außenseite 20 des zweiten Bauteils 14 verzichtet wurde. Lediglich für eine Wurzelgegenschweißung 25 (Figur 8) ist eine V-Kehle 26 an den beiden Bauteilen 13, 14 ausgearbeitet worden. Hinsichtlich der Fertigungsreihenfolge wird zunächst die V-Kehle 26 durch eine Wurzelgegenschweißung 25 gefüllt. Im nächsten Fertigungsschritt wird durch Elektronenstrahlschweißen die Schweißnaht 12 als vertikale I-Naht hergestellt, durch welche die in Bildebene senkrecht verlaufenden Schweißfugenflächen 17, 18 verbunden werden.

Die erfindungsgemäßen Wärmetauscherelemente können sehr hohe Wanddicken aufweisen. Es sind Wanddicken von bis zu 200 mm in einem einzigen Durchgang verschweißbar. Durch das Elektronenstrahlschweißen werden kostenintensive Füllmaterialien vermieden. Der Energieeintrag ist sehr gering, wodurch die Materialeigenschaften der zu verschweißenden Bauteile erhalten bleiben, weil die Wärmeeinflusszone sehr schmal ist.

Mittels des Elektronenstrahlschweißens ist es auch möglich, schwer zu verschweißende Materialien miteinander zu verbinden, wie beispielsweise hitzeempfindliche Materialien z.B. Nickellegierungen. Auch thermisch hoch leitfähige Materialien wie Kupferlegierungen können auf diese Art und Weise verschweißt werden, da aufgrund des geringeren Energieeintrags und der geringeren Wärmeeinflusszone nur ein kurzer Wärmeeintrag erfolgt. Der geringere Wärmeeintrag führt gleichzeitig zu weniger thermisch induzierten Spannungen, wodurch Schrumpfungen oder Verwerfungen im Werkstück vermieden werden. Als weiterer Vorteil ist zu nennen, dass sehr hohe Vorschubgeschwindigkeiten von bis zu 15 Metern pro Minute möglich sind.

Die Anwendung des Elektronenstrahlschweißens für Wärmetauscherelemente ist automatisiert und erfolgt unter CNC-Kontrolle, was einen hohen Grad der Wiederholbarkeit sicherstellt. Dadurch können Schweißnähte sehr hoher Qualität erzeugt werden, während gleichzeitig die Variablen des Schweißverfahrens kontrolliert und aufgezeichnet werden können.

Das Elektronenstrahlschweißen erfolgt unter Vakuum. Daher gibt es keine Oxidation und keine Oxideinlagerungen. Letztlich sind durch das Schweißen unter Vakuum sogar Titanwerkstoffe verschweißbar, was es ermöglicht, Wärmetauscherelemente mit ganz besonderen Eigenschaften herzustellen, die mittels üblichem Unterpulverschweißen nicht erreichbar sind.

Ein ganz besonderer Vorteil des erfindungsgemäßen Wärmetauscherelements 1 ist seine Eigenschaft in sehr kurzer Zeit aus seinen Bauteilen zusammengeschweißt werden zu können. Das ist auch darauf zurückzuführen, dass die Schweißnahtvorbereitung zwar sehr akkurat sein muss, um exakte Schweißfügeflächen 17, 18 bereitzustellen, allerdings muss nicht so viel Material abgetragen werden wie beim Unterpulverschweißen. Bei Unterpulverschweißen sind V-förmige Nähte erforderlich, die eine umfangreiche spanabhebende Bearbeitung erforderlich machen. Dadurch werden die Schweißnähte insgesamt dicker und größer. Auch die Wärmeeinflusszonen sind wesentlich breiter. All diese Nachteile werden bei den erfindungsgemäß hergestellten Wärmetauscherelementen mit den sehr schmalen Schweißnähten vermieden.

Im Rahmen der Erfindung werden Wärmetauscherelemente durch Verschweißen von einzelnen Bauteilen hergestellt, um sie nach weiteren Fertigungsschritten mit Rohren eines Wärmetauschers verbinden zu können. Da nach dem Verschweißen ein Wärmeverzug, insbesondere dann nicht ausgeschlossen werden kann, wenn zusätzlich Unterpulverschweißungen durchgeführt werden müssen, schließt sich an das Schweißen ein Richten an und gegebenenfalls ein Zuschneiden von Enden des Wärmetauscherelements. Anschließend können durch spanabhebende Bearbeitungen die gewünschten Öffnungen in das Wärmetauschergehäuse eingebracht werden. Versuche haben gezeigt, dass bei einem Verschweißen von Bauteilen mit einer Wanddicke von 30 mm auf einer Länge von 3.000 mm ausschließlich durch Unterpulverschweißen 17,42 Arbeitsstunden benötigt werden. Durch Kombination des Elektronenstrahlschweißens mit dem Unterpulverschweißen, wie es beispielsweise in Figur 8 gezeigt ist, konnte der Zeitaufwand auf 2,54 Stunden reduziert werden. Würde man bei dem Ausführungsbeispiel der Figur 8 zusätzlich die Wurzelgegenschweißung 25 entfallen lassen, reduziert sich der zeitaufwand auf 1,41 Stunden. Der Zeitaufwand ist etwa um einen Faktor 10 geringer. Bei rostfreien Stählen liegen die Werte der Schweißdauer gegenüber dem herkömmlichen Verfahren in einer Größenordnung von 20,91 h zu 1,41 Stunden bzw. 34,85 Stunden zu 1,41 Stunden. Bei hochlegierten Stählen (Wanddicke 14mm) betragen die Werte sogar 55,79 h bzw. 1,41 Stunden. Das ist nahezu ein Faktor 40 bei der Zeitersparnis. Entfällt das Unterpulverschweißen, entfallen auch die Kosten für Schweißpulver und Schweißzusatzwerkstoffe, wodurch sich naturgemäß auch die Fertigungskosten derartiger Wärmetauscherelemente allein durch den verringerten Materialeinsatz reduzieren.

### Bezugszeichen:

- 1 -: Wärmetauscherelement
- 2 -: Bauteil in Form eines Rohrbodens
- 3 -: Bauteil in Form eines Gewindebodens von 1
- 4 -: Bauteil in Form eines oberen Kammerblechs
- 5 -: Bauteil in Form eines unteren Kammerblechs
- 6 -: Bauteil in Form eines Trennblechs
- 7 -: Bauteil in Form einer Endplatte
- 8 -: Bauteil in Form einer Endplatte
- 9 -: Bohrung
- 10 -: Bauteil in Form eines Trennblechs
- 11 -: Bauteil in Form eines Trennblechs
- 12 -: Schweißnaht
- 13 -: Erstes Bauteil in Form eines Rohrbodens oder Gewindebodens
- 14 -: Zweites Bauteil in Form eines Rohrbodens oder Gewindebodens
- 15 -: Eckstoß
- 16 -: Außenkante
- 17 -: Schweißfugenfläche
- 18 -: Schweißfugenfläche
- 19 -: Außenseite
- 20 -: Außenseite
- 21 -: Vertiefung
- 22 -: Schweißwurzel
- 23 -: Absatz
- 24 -: Innenseite von 13
- 25 -: Wurzelgegenschweißung
- 26 -: Kehle
- 27 -: Decknaht
- 29 -: Schweißfuge
- 30 -: oberer Schenkel
- 31 -: untere Schenkel

- A1 -: Abstand
- A2 -: Abstand

## Patentansprüche

1. Wärmetauscherelement aus mehreren miteinander verschweißten Bauteilen (2-8, 10, 11, 13, 14),
a) wobei zwei der Bauteile (13, 14) einen Eckstoß (15) bilden,
b) wobei eine Wurzelgegenschweißung (25) als V-Naht ausgeführt ist,
c) wobei die V-Naht der Wurzelgegenschweißung (25) schräg zu einer durch Elektronenstrahlschweißen hergestellten Schweißnaht (12) steht, **dadurch gekennzeichnet, dass**
d) an dem einen Bauteil (13) ein zurückspringender Absatz (23) ausgebildet ist als Auflager für das zweite Bauteil (14), so dass eine L-förmige Schweißfuge (29) gebildet wird,
e) wobei benachbart des Absatzes (23) eine im ersten Bauteil und im zweiten Bauteil zurückspringende Kehle (26) als Nahtvorbereitung für die Wurzelgegenschweißung (25) angeordnet ist,
f) wobei sich in der Kehle (26) die Wurzelgegenschweißung (25) befindet, mittels welcher ein unterer Schenkel (31) der L-förmigen Schweißfuge (29) aufgeschmolzen und die Bauteile (13, 14) verbunden sind,
g) wobei von der gegenüberliegenden Seite in dem oberen Schenkel (30) der L-förmigen Schweißfuge (29) eine durch Elektronenstrahlschweißen hergestellte, I-förmige Schweißnaht (12) auf die Wurzelgegenschweißung (25) gerichtet ist und die Schweißfuge (29) von der gegenüberliegenden Seite her vollständig füllt, wobei die V-Naht der Wurzelgegenschweißung (25) schräg zu dem unteren Schenkel (31) der L-förmigen Schweißfuge (29) steht.

2. Wärmetauscherelement nach Anspruch 1, **dadurch gekennzeichnet, dass** Schweißfugenflächen (17, 18) des oberen Schenkels (30) der L-förmigen Schweißfuge (29) senkrecht zu einer Außenseite (20) eines Bauteils (14) stehen.

3. Wärmetauscherelement nach Anspruch 1, **dadurch gekennzeichnet, dass** die Schweißwurzel (22) der durch Elektronenstrahlschweißen hergestellten, L-förmigen Schweißnaht (12) im Abstand (A2) von einer Innenseite (24) des ersten Bauteils (13) verläuft.

4. Wärmetauscherelement nach einem der Ansprüche 1 bis 3, **dadurch gekennzeichnet, dass** die Wurzelgegenschweißung (25) ein- oder mehrlagig als Unterpulver-, Plasma-, WIG- oder MAG-Schweißung ausgeführt ist.

5. Wärmetauscherelement nach einem der Ansprüche 1 bis 4, **dadurch gekennzeichnet, dass** wenigstens ein Bauteil (13, 14) eine Wand oder ein Rohrboden eines Wärmetauscherkopfes ist.

6. Wärmtauschelement nach einem der Ansprüche 1 bis 5, **dadurch gekennzeichnet, dass** wenigstens ein Bauteil (13, 14) mit einem weiteren als Wand oder Rohrboden, als Trennblech oder als Anschlussstück für den Wärmetauscherkopf ausgebildeten Bauteil (13, 14) verbunden ist.

7. Wärmetauscherelement nach Anspruch 6, **dadurch gekennzeichnet, dass** das erste Bauteil zylindrisch ist, und das zweite Bauteil ein Deckel für das erste Bauteil ist.

8. Wärmtauschelement nach einem der Ansprüche 1 bis 7, **dadurch gekennzeichnet, dass** die Bauteile jeweils eine Dicke von 10 bis 200 mm haben.

9. Wärmetauscherelement nach einem der Ansprüche 1 bis 8, **dadurch gekennzeichnet, dass** die zu verschweißenden Bauteile (2-8, 10, 11, 13, 14) aus einem der folgenden gemäß ASTM bezeichneten Werkstoffe bestehen:
SA-516 Gr60, P265GH, SA-516 Gr70, SA-537 Cl1, SA-350 LF2 CL1, SA-333 Gr6, P355NH, SA-335P22, SA-387 Gr11Cl2, SA-387 Gr12Cl1, SA-387 Gr11Cl1, SA-240 Gr304L, SA-240 Gr304, SA-240 Gr316L, X6CrNiRi18-10 (321), X2CrNiMo17-12-2(316L).

10. Verfahren zur Herstellung eines Wärmetauscherelements mit folgenden Schritten:
a) an einem ersten Bauteil (13) wird vor dem Verschweißen mit einem zweiten Bauteil (14) zu einem Eckstoß (15) ein zurückspringender Absatz (23) ausgebildet, der als Auflager für das zweite Bauteil (14) dient, so dass eine L-förmige Schweißfuge (29) zwischen den Bauteilen (13, 14) gebildet wird;
b) benachbart des Absatzes (23) wird im ersten Bauteil (13) und im zweiten Bauteil (14) eine zurückspringende Kehle (26) als Nahtvorbereitung für eine Wurzelgegenschweißung (25) hergestellt;
c) es wird eine Wurzelgegenschweißung in der zurückspringenden Kehle (26) durchgeführt, wobei ein unterer Schenkel (31) der L-förmigen Schweißfuge (29) aufgeschmolzen wird und die Bauteile (13, 14) miteinander verbunden werden, wobei die Wurzelgegenschweißung (25) bis in den anderen Schenkel (30) der Schweißfuge (29) reicht;
d) es wird von der gegenüberliegenden Seite in dem oberen Schenkel (30) der Schweißfuge (29) eine durch Elektronenstrahlschweißen hergestellte L-förmige Schweißnaht (12) auf die Wurzelgegenschweißung (25) gerichtet und die Schweißfuge (29) vollständig gefüllt.

11. Verfahren nach Anspruch 10, **dadurch gekennzeichnet, dass** ein Nahtüberstand der durch Elektronenstrahlschweißen hergestellten Schweißnaht (12) in einem weiteren Schweißvorgang abgeschmolzen wird, so dass er sich vollständig in einer Vertiefung (21) an einer Außenseite (20) befindet und nicht über die Außenseite (20) vorsteht.

12. Verfahren nach Anspruch 10 oder 11, **dadurch gekennzeichnet, dass** die die Wurzelgegenschweißung (25) ein- oder mehrlagig als Unterpulver-, Plasma-, WIG- oder MAG-Schweißung ausgeführt wird.

## Claims

1. Heat exchanger element comprising a plurality of components (2-8, 10, 11, 13, 14) which are welded together,
a) wherein two of the components (13, 14) form a corner joint (15),
b) wherein a root counter weld (25) is formed as a V-seam,
c) wherein the V-seam of the root counter weld (25) is located obliquely to a welding seam (12) produced by electron beam welding, **characterised in that**
d) on one component (13) a set-back shoulder (23) is formed as support for the second component (14) so that an L-shaped welding joint (29) is formed,
e) wherein adjacent to the shoulder (23) a set-back hollow (26) in the first component and in the second component is arranged as seam preparation for the root counter weld (25),
f) wherein in the hollow (26) the root counter weld (25) is located, by means of which a lower leg (31) of the L-shaped welding joint (29) is melted and the components (13, 14) are joined together,
g) wherein from the opposite side in the upper leg (30) of the L-shaped welding joint (29) an I-shaped welding seam (12) produced by electron beam welding is directed to the root counter weld (25) and the welding joint (29) is completely filled from the opposite side, wherein the V-seam of the root counter weld (25) is located obliquely to the lower leg (31) of the L-shaped welding joint (29).

2. Heat exchanger element according to claim 1, **characterised in that** welding joint faces (17, 18) of the upper leg (30) of the L-shaped welding joint (29) are perpendicular to an outer side (20) of a component (14).

3. Heat exchanger element according to claim 1, **characterised in that** the weld root (22) of the L-shaped welding seam (12) produced by electron beam welding is at a distance (A2) from an inner side (24) of the first component (13).

4. Heat exchanger element according to any of claims 1 to 3, **characterised in that** the root counter weld (25) is formed from one or a plurality of layers by submerged arc welding, plasma arc welding, TIG welding or MAG welding.

5. Heat exchanger element according to any of claims 1 to 4, **characterised in that** at least one component (13, 14) is a wall or a tube sheet of a heat exchanger head.

6. Heat exchanger element according to any of claims 1 to 5, **characterised in that** at least one component (13, 14) is connected to a further component (13, 14) formed as a wall or tube sheet, as a partition plate or as a connection piece for the heat exchanger head.

7. Heat exchanger element according to claim 6, **characterised in that** the first component is cylindrical and the second component is a cover for the first component.

8. Heat exchanger element according to any of claims 1 to 7, **characterised in that** the components each have a thickness of 10 to 200 mm.

9. Heat exchanger element according to any of claims 1 to 8, **characterised in that** the components (2-8, 10, 11, 13, 14) to be welded are made from one of the following ASTM-designated materials: SA-516 Gr60, P265GH, SA-516 Gr70, SA-537 Cl1, SA-350 LF2 CL1, SA-333 Gr6, P355NH, SA-335P22, SA-387 Gr11Cl2, SA-387 Gr12Cl1, SA-387 Gr11Cl1, SA-240 Gr304L, SA-240 Gr304, SA-240 Gr316L, X6CrNiRi18-10 (321), X2CrNiMo17-12-2(316L).

10. Method for producing a heat exchanger element comprising the following steps:
a) on a first component (13) before welding with a second component (14) to a corner joint (15) a set-back shoulder (23) is formed, which is used as a support for the second component (14), so that an L-shaped welding joint (29) is formed between the components (13, 14);
b) adjacent to the shoulder (23) in the first component (13) and in the second component (14) a set-back hollow (26) is produced as seam preparation for a root counter weld (25);
c) a root counter weld is made in the set-back hollow (26), wherein a lower leg (31) of the L-shaped welding joint (29) is melted and the components (13, 14) are joined to one another, wherein the root counter weld (25) extends into the other leg (30) of the welding joint (29);
d) from the opposite side in the upper leg (30) of the welding joint (29) an L-shaped welding seam (12) produced by electron beam welding is directed to the root counter weld (25) and the welding joint (29) is completely filled.

11. Method according to claim 10, **characterised in that** a seam protrusion of the welding seam (12) formed by electron beam welding is melted in a further welding process, so that it is located fully in a recess (21) on an outer side (20) and does not protrude beyond the outer side (20).

12. Method according to claim 10 or 11, **characterised in that** the root counter weld (25) is formed of one or a plurality of layers by submerged arc welding, plasma arc welding, TIG welding or MAG welding.

## Revendications

1. Élément d'échange de chaleur de plusieurs composants (2-8, 10, 11, 13, 14) soudés entre eux,
a) dans lequel deux des composants (13, 14) forment un joint angulaire (15),
b) dans lequel un soudage antagoniste de racine (25) est exécuté comme joint en V,
c) dans lequel le joint en V du soudage antagoniste de racine (25) est en biais par rapport à un cordon de soudure (12) fabriqué par soudure par faisceau électronique, **caractérisé en ce que**
d) au niveau de l'un composant (13), un épaulement (23) en retrait est réalisé comme appui pour le second composant (14) de sorte qu'un joint de soudure (29) en forme de L soit formé,
e) dans lequel de manière contiguë à l'épaulement (23), une gorge (26) en retrait dans le premier composant et dans le second composant est agencée comme préparation de joint pour le soudage antagoniste de racine (25),
f) dans lequel le soudage antagoniste de racine (25) se trouve dans la gorge (26), au moyen duquel une branche inférieure (31) du joint de soudure (29) en forme de L est fondue et les composants (13, 14) sont reliés,
g) dans lequel un cordon de soudure (12) en forme de L, fabriqué par soudure par faisceau électronique est dirigé sur le soudage antagoniste de racine (25) par le côté opposé dans la branche supérieure (30) du joint de soudure (29) en forme de L et remplit complètement le joint de soudure (29) depuis le côté opposé, dans lequel le joint en V du soudage antagoniste de racine (25) est en biais de la branche inférieure (31) du joint de soudure (29) en forme de L.

2. Élément d'échange de chaleur selon la revendication 1, **caractérisé en ce que** des surfaces de joint de soudage (17, 18) de la branche supérieure (30) du joint de soudure (29) en forme de L sont perpendiculaires à un côté extérieur (20) d'un composant (14).

3. Élément d'échange de chaleur selon la revendication 1, **caractérisé en ce que** la racine de soudage (22) du cordon de soudage (12) en forme de L fabriqué par soudure par faisceau électronique s'étend à distance (A2) d'un côté intérieur (24) du premier composant (13).

4. Élément d'échange de chaleur selon l'une quelconque des revendications 1 à 3, **caractérisé en ce que** le soudage antagoniste de racine (25) est exécuté à une ou plusieurs couches comme soudage à l'arc sous flux poudreux, au plasma, à l'arc TIG ou à l'arc sous protection des gaz actifs avec métal d'apport.

5. Élément d'échange de chaleur selon l'une quelconque des revendications 1 à 4, **caractérisé en ce qu'**au moins un composant (13, 14) est une paroi ou un fond tubulaire d'une tête d'échangeur de chaleur.

6. Élément d'échange de chaleur selon l'une quelconque des revendications 1 à 5, **caractérisé en ce qu'**au moins un composant (13, 14) est relié à un autre composant (13, 14) réalisé comme paroi ou fond tubulaire, comme tôle de séparation ou comme pièce de raccordement pour la tête d'échange de chaleur (13, 14).

7. Élément d'échange de chaleur selon la revendication 6, **caractérisé en ce que** le premier composant est cylindrique, et le second composant est un couvercle pour le premier composant.

8. Élément d'échange de chaleur selon l'une quelconque des revendications 1 à 7, **caractérisé en ce que** les composants présentent respectivement une épaisseur de 10 à 200 mm.

9. Élément d'échange de chaleur selon l'une quelconque des revendications 1 à 8, **caractérisé en ce que** les composants à souder (2-8, 10, 11, 13, 14) consistent en un des matériaux désignés selon ASTM suivants :
SA-516 Gr60, P265GH, SA-516 Gr70, SA-537 Cl1, SA-350 LF2 CL1, SA-333 Gr6, P355NH, SA-335P22, SA-387 Gr11Cl2, SA-387 Gr12Cl1, SA-387 Gr11Cl1, SA-240 Gr304L, SA-240 Gr304, SA-240 Gr316L, X6CrNiRi18-10 (321), X2CrNiMo17-12-2(316L).

10. Procédé de fabrication d'un élément d'échange de chaleur avec les étapes suivantes :
a) un épaulement (23) en retrait est réalisé au niveau d'un premier composant (13) avant le soudage avec un second composant (14) à un joint angulaire (15), lequel sert d'appui au second composant (14) de sorte qu'un joint de soudure (29) en forme de L soit formé entre les composants (13, 14) ;
b) de manière contigüe à l'épaulement (23), une gorge (26) en retrait est fabriquée dans le premier composant (13) et dans le second composant (14) comme préparation de joint pour un soudage antagoniste de racine (25) ;
c) un soudage antagoniste de racine dans la gorge (26) en retrait est exécuté, dans lequel une branche inférieure (31) du joint de soudure (29) en forme de L est fondue et les composants (13, 14) sont reliés entre eux, dans lequel le soudage antagoniste de racine (25) s'étend jusque dans l'autre branche (30) du joint de soudure(29) ;
d) par le côté opposé dans la branche supérieure (30) du joint de soudure (29) un cordon de soudage (12) en forme de L fabriqué par soudure par faisceau électronique est dirigé sur le soudage antagoniste de racine (25) et le joint de soudure (29) est complètement rempli.

11. Procédé selon la revendication 10, **caractérisé en ce qu'**un porte à faux de joint du cordon de soudure (12) fabriqué par soudure par faisceau électronique est fondu dans un autre processus de soudage de sorte qu'il se trouve complètement dans une cavité (21) au niveau d'un côté extérieur (20) et ne dépasse pas du côté extérieur (20).

12. Procédé selon la revendication 10 ou 11, **caractérisé en ce que** le soudage antagoniste de racine (25) est réalisé à une ou plusieurs couches comme soudage à l'arc sous flux poudreux sous-poudre, au plasma, à l'arc TIG ou à l'arc sous protection des gaz actifs avec métal d'apport.
